Europäisches Patentamt

European Patent Office

Office européen des brevets

(19)

(11) Publication number: **0 428 467 A1**

# (12) EUROPEAN PATENT APPLICATION

(21) Application number: **90500002.2**

(22) Date of filing: **10.01.90**

(51) Int. Cl.5: **B60R 7/04**

(30) Priority: **13.11.89 ES 8903848**

(43) Date of publication of application:
**22.05.91 Bulletin 91/21**

(84) Designated Contracting States:
**AT BE CH DE DK FR GB GR IT LI LU NL SE**

(71) Applicant: **Gonzalez Miruri, Alberto**
**Francisco Silvela, 76**
**E-28028 Madrid(ES)**

(72) Inventor: **Gonzalez Miruri, Alberto**
**Francisco Silvela, 76**
**E-28028 Madrid(ES)**

(74) Representative: **De Arpe Fernandez, Manuel**
**ARPE Patentes y Marcas Guzmán El Bueno,**
**133**
**E-28003 Madrid(ES)**

(54) Device for concealing objects in automobiles.

(57) For providing a spoliation-resistant housing for objects placed in the interior of automobiles, there is provided a case-receptacle (1) capable of being inserted in a panel of the vehicle (19) with a retractable flap (2), by means of electromechanical means (12) with a motor (13). The reliable closure is guaranteed by means of electric latches (6), the opening/closing of which is carried out synchronously with the oscillation of the flap (2), that is to say with the turn of the motor (13).

Fig. 1

Fig. 6

## DEVICE FOR CONCEALING OBJECTS IN AUTOMOBILES.

The present invention relates to a safety device designed to proportion a safe accomodation for objects such as portfolios or the like which are easily adaptable to a panel of the vehicle, for example, to the back of a vehicle seat.

Automobile users frequently have the need to place in the interior of the vehicle objects such as portfolios or briefcases which, due to the size thereof, cannot be accomodated in the spaces provided for such purpose in automobiles, so that they are subject to a possible spoliation.

Several devices for concealing objects and apparatus in automobiles are already known. In fact, Spanish utility models Nos. 8801381, 8801699 and 8801844 as well as Spanish patent application No. 8902293, all in the name of the applicant of the present application, disclose various devices for concealing objects capable of being inserted in the panels of a vehicle. Nevertheless, the said devices are specially designed for accomodating radio apparatus, radiotelephones, etc., so that they are not suitable for housing objects such as portfolios and the like.

It is an object of the invention to provide a device of the aforementioned type designed to conceal objects such as portfolios and the like.

In accordance with the invention, this object is achieved inasmuch as the device is comprised of a case-receptacle insertable in a panel of the vehicle having a flap retractable about lower hinges, at which the said retractable flap is activated, insofar as its opening/closing, by means of a rack provided in the said flap and gears operated by an electric motor. Furthermore there is provided a plurality of electrically operated closure latches, in conjunction with the aforesaid means for retracting the cover of the case-receptacle.

In accordance with the invention the electric closure latches may be activated by an electronic habilitation signal generated by an electronic code or combination device, so that the opening of the said latches may only take place if the mentioned correct opening code or combination has been inserted.

Other characteristics and advantages of the invention will be more fully understood from the following description taken in conjunction with the accompanying drawings, in which:

Figures 1 and 2 illustrate perspective views of a case according to the invention in one of its two operating positions.

Figures 3 and 4 illustrate, schematically, elevational views, in partial section, of the case in the positions of figures 1 and 2, showing a detail of the opening/closing devices thereof.

Figures 5 and 6 also illustrate schematically the coupling of a case according to figures 1 and 2 to the panel of a vehicle, more particularly to the posterior panel of a vehicle seat.

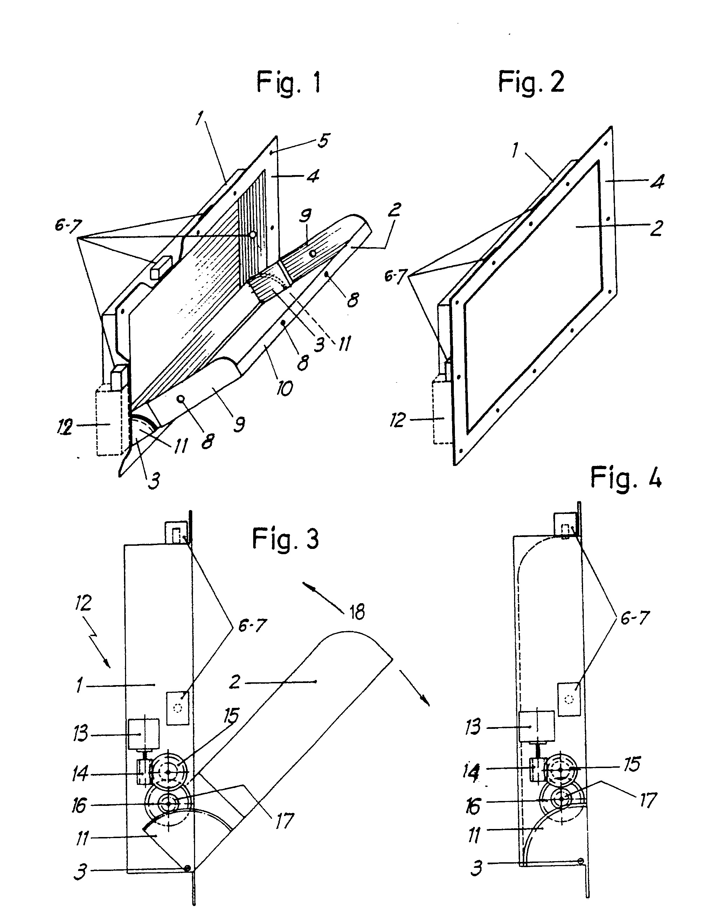

Referring to figures 1 and 2, it can be seen that the device of the invention is essentially comprised of a case 1 with a retractable flap 2 about lower hinges 3. This case 1, which is capable of being inserted in a vehicle panel, as will be described later on, has a perimetral flange 4 for coupling and fastening to the said panel, for example, by means of screws, not represented, mounted in holes 5 provided for such purpose. Additionally and in order to guarantee a safe closure, there are provided electrically operated latches 6, the bolts 7 whereof will lock themselves in holes 8 correspondingly provided at the sides 9 and 10 of the flap 2.

Oscillation of the flap 2 with respect to the case 1 about the hinges 3 is achieved by means of circular sector racks 11 provided in the flap 2 cooperative with electromechanical operating means 12 mounted on the inner sides of the case 1.

As will more clearly be seen in figures 3 and 4, each of the electromechanical operating means 12 is essentially comprised of an electric motor 13, at the distal end of whose shaft is provided a worm pinion 14 and a set of gears 15-16. The end gear 16 incorporates laterally a pinion 17 which meshes with the teeth of the rack 11. In this manner, when the electric motor 13 turns in a clockwise and anti-clockwise direction, oscillation of the flap 2 in the direction shown by arrow 18 is achieved. As will readily be understood by persons skilled in the art, means for achieving the reversal of the turn of the motor, not represented, will be provided, which means may be arranged in the manner deemed most suitable by the technician since it is known per se.

With further reference to figures 3 and 4, it can be seen that the closure of the flap 2 on the case 1 is guaranteed by the electric latches 6, the bolts 7 of which will lock themselves in the aforesaid holes 8 of the flap. As will readily be understood by persons skilled in the art, opening/closing of the electric latches 6 will take place coordinately with the starting/stopping of the electric motor 13 of the means 12, so that when the bolts 7 of the closure latches 6 are retracted, an electric signal for the starting of the motor 13 will be produced, whilst if the running of the said motor 13 terminates in an anti-clockwise direction, an electric control signal will be produced so that the latches 6 may extend their bolts 7 in order to close the device.

In accordance with the invention, it may be advantageous for the control signal for opening of the electric latches to be generated by an electronic digital code or combination device, so that the said opening signal will only be generated if the correct numeric code or combination is inserted. These electronic devices are known per se, so that they could be arranged in the manner deemed most convenient by the technician, for which reason they have deliberately and for the sake of clarity not been represented in the drawings.

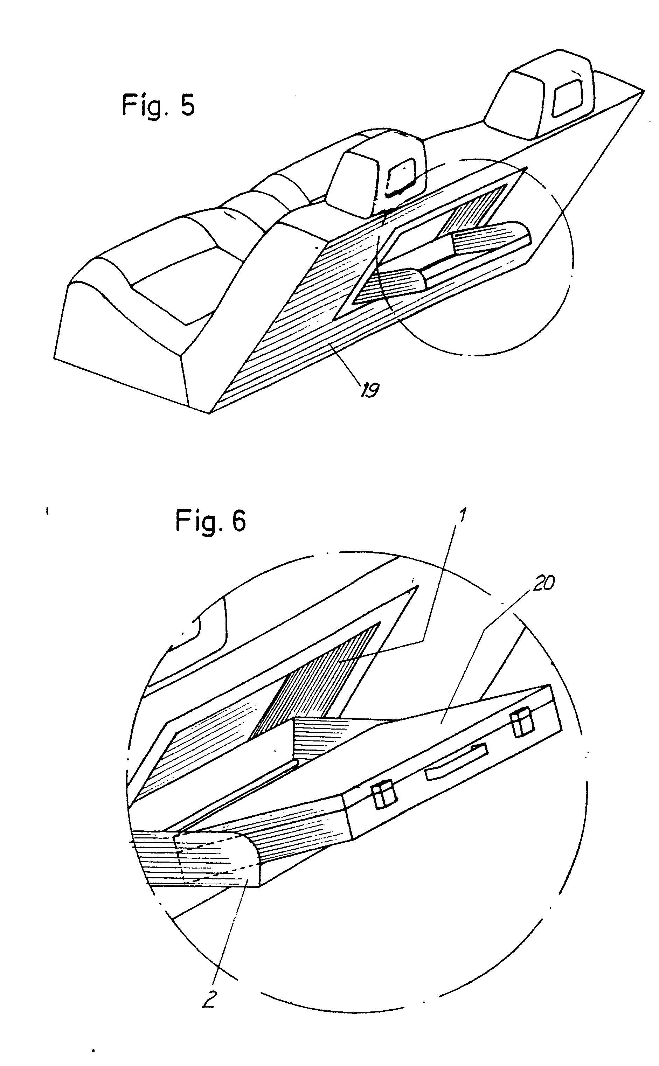

Finally, with reference to figures 5 and 6, it can be seen that a concealing device, in accotdance with the invention, may be advantageously inserted in a vehicle panel 19, such as for example the posterior panel of the seat of a vehicle, so that a housing is provided therein for an object 20 such as a portfolio, case or the like.

Having described the object of the invention in sufficient detail, there only remains to be said that the embodiments resulting from variations in shape, sizes, materials and the like, as well as those resulting from a routine application of the aforegoing teachings should be deemed as included within the scope thereof, in accordance with the following claims.

## Claims

1. Device for concealing objects in automobiles, characterised in that it is comprised of:
- A case-receptacle (1) capable of being inserted in a vehicle panel (19);
- A flap (2) retractable about hinges (3) provided in the bottom of the said case (1), having racks (11) adjacent the said hinges (3);
- Electromechanical means (12) operatively coupled to the said racks (11) for producing the clockwise or anti-clockwise (18) turn of the flap (2) with respect to the insertable case (1);
- Latches (6) provided in the case (1), with electrically operated bolts (7) capable of being closed in holes (8) correspondingly provided in the case (1); and
- An electric or electronic device for generating control signals for synchronising the opening/closing of the flap (2) and the opening/closing of the latches (6).

2. Concealing device according to claim 1, characterised in that the control signal for opening the latches (6) and the consequent starting of the motor (13) is generated by an electronic code or combination codifying device which will only generate the said control signal when the correct combination or code is inserted.

3. Concealing device according to any one of the preceding claims, characterised in that the means (12) for the oscillating operation of the flap (2) comprises:
- An electric motor (13) having turn reversal devices; - A worm pinion (14) coupled to the output shaft of the said electric motor (13); and
- A set of gears (15-16) with an end pinion or crown wheel (17) for transmitting the turning movement of the said micro-motor (13) to the geared rack (11) of the flap (2).

# Fig. 1

# Fig. 2

# Fig. 3

# Fig. 4

Fíg. 5

19

Fig. 6

1

20

2

**European
Patent Office**

**EUROPEAN SEARCH
REPORT**

Application Number

**EP 90 50 0002**

## DOCUMENTS CONSIDERED TO BE RELEVANT

| Category | Citation of document with Indication, where appropriate, of relevant passages | Relevant to claim | CLASSIFICATION OF THE APPLICATION (Int. Cl.5) |
|---|---|---|---|
| A | DE-A-3 532 575 (KIRSTEN)<br>* Claims 1-5,9-12; column 6, lines 40-51; figures 1,3,4 *<br>— — — | 1,3 | B 60<br>R 7/04 |
| A | US-A-1 646 266 (STONER)<br>* Page 1, lines 48-53; figures 1,3 *<br>— — — | 1 | |
| A | WO-A-8 703 034 (SIGHOLM)<br>* Claim 1 *<br>— — — — — | 2 | |
|  |  |  | TECHNICAL FIELDS SEARCHED (Int. Cl.5) |
|  |  |  | B 60 R<br>B 60 P<br>E 05 G<br>G 07 G |

The present search report has been drawn up for all claims

| Place of search | Date of completion of search | Examiner |
|---|---|---|
| The Hague | 23 January 91 | VAN KESSEL J.J. |

CATEGORY OF CITED DOCUMENTS

X : particularly relevant if taken alone
Y : particularly relevant if combined with another
    document of the same catagory
A : technological background
O : non-written disclosure
P : intermediate document
T : theory or principle underlying the invention

E : earlier patent document, but published on, or after
    the filing date
D : document cited in the application
L : document cited for other reasons

& : member of the same patent family, corresponding
    document